# EUROPÄISCHE PATENTSCHRIFT

(11) **EP 0 645 841 B1**
(45) Veröffentlichungstag und Bekanntmachung des Hinweises auf die Patenterteilung: **11.11.1998**
(21) Anmeldenummer: 94113179.9
(22) Anmeldetag: 24.08.1994
(51) Int. Cl.: H01R 4/24, H01R 9/26

(54) **Reihenklemme**
Terminals for side by side mounting
Bornes pour montage en ligne

(30) Priorität: 24.09.1993 DE 4333263
(43) Veröffentlichungstag der Anmeldung: 29.03.1995
(73) Patentinhaber: KRONE Aktiengesellschaft, 14167 Berlin-Zehlendorf (DE)
(72) Erfinder: Bippus, Hans-Dieter, Hogate NSW 2250 (AU); Munshi, Rafik, Gorokan NSW 2263 (AU); Glen, Jeff, Birchgrove NSW 2041 (AU)

(56) Entgegenhaltungen:
- EP-A- 0 272 200
- EP-A- 0 286 577
- EP-A- 0 498 151
- EP-A- 0 547 964
- DE-A- 3 233 255
- DE-U- 9 203 970
- FR-A- 2 535 911
- US-A- 4 541 682

## Beschreibung

Die Erfindung bezieht sich auf eine Reihenklemme aus einem Isolierstoffgehäuse nach dem Oberbegriff des Anspruches 1. Derartige Reihenklemmen werden zur Verbindung von Leitern für Spannungen bis zu 1000 V verwendet.

Eine Reihenklemme der gattungsgemäßen Art ist aus der US-A- 4 451 682 vorbekannt. Diese Anschlußleiste dient zum Anschluß von Dropwire-Kabeln. Die Kabel können jeweils an einen Schneid-Klemm-Kontaktelement angeschlossen werden, die Kontaktelemente sind zweireihig nebeneinander in der Anschlußleiste angeordnet. Jedes Kontaktelement besitzt einen Mittelabgriff, der zum Anschluß eines mit Überspannungsableitern bestückten Überspannungsableiter- Magazins genutzt wird. Bei dieser Anschlußleiste sind keine zusätzlichen Schaltfunktionen und Prüfungen an den Schneid-Klemm-Kontaktelementen möglich, sobald die Mittelabgriffe durch das Magazin belegt sind. Ferner besteht keine Möglichkeit elektrische Verbindungen zwischen den Schneid-Klemm-Kontaktelementen herzustellen.

Eine weitere Reihenklemme ist aus der EP-A- 0 272 200 vorbekannt, bei der die Überspannungsableiter in der Anschlußleiste integriert sind. Somit sind keine Mittelabgriffe vorhanden. Die Baubreite einer derartigen Anschlußleiste ist aufgrund der integrierten Überspannungsableiter verhältnismäßig groß. Ferner ist keine Möglichkeit vorhanden, die einzelnen Schneid-Klemm-Kontaktelemente miteinander über einen Stecker zu verbinden.

Die EP -A- 0 498 151 zeigt eine Reihenklemme, die innerhalb einer ersten Reihe ein Schneid-Klemm-Kontaktelement und innerhalb der zweiten Reihe einen Schraubanschluß aufweist. Auch hier ist keine Möglichkeit vorhanden, zusätzlich zu den Funktionssteckern, elektrische Verbindungen der einzelnen Schneid-Klemm-Kontaktelemente herzustellen.

Eine weitere Reihenklemme der gattungsgemäßen Art ist aus der DE-PS 29 02 536 vorbekannt.

Bei dieser Reihenklemme werden die Leiter in im Isolierstoffgehäuse beweglich angeordnete Betätigungsglieder aus elektrisch isolierendem Material eingesteckt und durch eine Schwenkbewegung der Betätigungsglieder in die mit Schneidkanten versehenen Schneid-Klemm-Kontaktelemente eingedrückt. Die beiden Schneid-Klemm-Kontaktelemente der Reihenklemme sind über eine metallische Verbindung leitend miteinander verbunden, so daß nach dem Eindrücken der Leiter in die Kontaktschlitze der Schneid-Klemm-Kontaktelemente eine elektrische Verbindung zwischen den beiden Leitern hergestellt ist, ohne daß ein Abisolieren der Leiter erforderlich ist, da bei der Herstellung der Verbindung die Schneidkanten der Schneid-Klemm-Kontaktelemente die Isolierungen der Leiter durchdringen und die elektrische Verbindung dabei unter Verquetschen des metallischen Leiterkern hergestellt wird. Nachteilig bei dieser vorbekannten Reihenklemme ist das zusätzlich erforderliche Betätigungsglied zum Eindrücken der Leiter in die Schneid-Klemm-Kontaktelemente. Ferner ist es nachteilig, daß ein Schutz der in der Reihenklemme verbundenen Leiter gegen Überspannungen und/oder Überströme und ein Abgreifen der über die Reihenklemme geführten Spannung nicht möglich sind.

Der Erfindung liegt von daher die Aufgabe zugrunde, die Reihenklemme der gattungsgemäßen Art dahingehend zu verbessern, daß das Anschließen der Leiter an die Schneid-Klemm-Kontaktelemente vereinfacht und ein Schutz der Leitungen gegen Überspannungen und/oder Überströme und ein Abgriff der über die Reihenklemme geführten Spannungen möglich sind.

Zur Lösung dieser Aufgabe sieht die Erfindung vor, daß die Schneid-Klemm-Kontaktelemente getrennt voneinander im Isolierstoffgehäuse angeordnet sind und daß jedes Schneid-Klemm-Kontaktelement mit einem Mittelabgriff verbunden und die auf Abstand im Isolierstoffgehäuse gegenüberstehenden Mittelabgriffe mit unterschiedlichen Funktionssteckern elektrisch miteinander verbindbar sind. Die erfindungsgemäße Reihenklemme besitzt somit zwei isoliert voneinander im Isolierstoffgehäuse angeordnete Schneid-Klemm-Kontaktelemente, die in einfacher Weise durch Eindrücken eines Leiters in den Kontaktschlitz des jeweiligen Schneid-Klemm-Kontaktelementes mit einem Leiter verbindbar sind. Die an die Schneid-Klemm-Kontaktelemente der Reihenklemme angeschlossenen ankommenden und abgehenden Leiter sind zunächst nicht elektrisch miteinander verbunden, da jedes Schneid-Klemm-Kontaktelement mit einem Mittelabgriff versehen und die Mittelabgriffe auf Abstand voneinander angeordnet sind. Die Mittelabgriffe werden erst durch Funktionsstecker unterschiedlicher Bauart elektrisch miteinander verbunden. Somit ist es möglich, eine unmittelbare Verbindung der Mittelabgriffe durch einen Verbindungsstecker durchzuführen. Zum Schutz der ankommenden und abgehenden Leiter kann jedoch anstelle des Verbindungssteckers ein Sicherungsmagazin auf die Mittelabgriffe aufgesteckt werden, so daß die Leiter durch das Sicherungsmagazin und die darin angeordneten Sicherungselemente miteinander verbunden sind. Auch können die Mittelabgriffe über einen Teststecker miteinander verbunden sein, der eine Herausführung der Leiterstrecke zu Testzwecken ermöglicht.

In besonders bevorzugter Weise sind mehrere Paare gegenüberliegender Schneid-Klemm-Kontaktelemente in einem Isolierstoffgehäuse nebeneinander angeordnet, wobei die Anordnung von zehn Paaren gegenüberliegender Schneid-Klemm-Kontaktelemente im Isolierstoffgehäuse bevorzugt wird. In weiterer erfindungsgemäßer Ausbildung ist zur elektrischen Verbindung zweier oder mehrerer nebeneinander liegender Schneid-Klemm-Kontaktelemente die Anordnung von Brückensteckern möglich, die in den Schneid-Klemm-Kontaktelementen und den zugehörigen Mittelabgriffen zugeordnete Brückenabgriffe einsteckbar sind. Somit kann die über einen ankommenden Leiter an einem Schneid-Klemm-Kontaktelement eines Paares ankommende Spannung auf mehrere gegenüberliegende und nebeneinander angeordnete Schneid-Klemm-Kontaktelemente und die an diesen angeschlossenen abgehenden Leiter übertragen werden.

Die erfindungsgemäße Reihenklemme kann insbesondere zur Verbindung von Kupferleitern (auch Litzenleiter) mit Leiterquerschnitten zwischen etwa 0,5 mm² und 1,5 mm² verwendet werden, wobei Isolationsbedingungen bis zu 1000 V eingehalten sind. Die Reihenklemme wird insbesondere eingesetzt bei allen elektrischen Schalt-, Schutz- und Steuereinrichtungen, wie PLC-Verkabelungen, Klimaanlagen, Motorsteuerungen, Signaleinrichtungen, verfahrenstechnischen Anlagen u.dgl..

Die Reihenklemme verwendet einen einstückigen Kontakt, der aber gleichzeitig in gegenüberliegender Anordnung als Kontaktpaar eingesetzt wird und bei dem die angeschlossenen Leiter mittels eines Verbindungssteckers verbunden oder getrennt werden. Auch können die Leiter auf einer Seite der als Zehnerblock ausgebildeten Reihenklemme mittels eines Brückensteckers gemeinsam elektrisch verbunden werden. Auch die Einschaltung von Sicherungsmodulen oder Teststeckern zwischen die Kontakte ist möglich. Die Reihenklemme ist für höhere Spannugne, höhere Ströme und große Leiterquerschnitte geeignet.

Die Erfindung ist nachfolgend anhand eines Ausführungsbeispieles einer Reihenklemme für zehn Paare gegenüberliegender Schneid-Klemm-Kontaktelemente und anhand mehrerer Ausführungsbeispiele von Funktionssteckern näher erläutert. Es zeigen:
- Fig. 1: einen Querschnitt durch die Reihenklemme,
- Fig. 2: einen Querschnit durch das Gehäuse-Unterteil,
- Fig. 3: einen Querschnitt nach Fig. 2 mit eingesetzten Schneid-Klemm-Kontaktelementen,
- Fig. 4: eine Seitenansicht des Unterteils,
- Fig. 5: die Draufsicht auf das Unterteil,
- Fig. 6: die Seitenansicht des Oberteils,
- Fig. 7: die Seitenansicht der montierten Reihenklemme
- Fig. 8: die Draufsicht auf die Reihenklemme,
- Fig. 9: die Draufsicht auf eine Brücke,
- Fig.10: die Seitenansicht der Brücke,
- Fig.11: die Ansicht eines Verbindungssteckers,
- Fig.12: die Seitenansicht des Verbindungssteckers,
- Fig.13: die Draufsicht auf den Verbindungsstecker,
- Fig.14: die Ansicht des Schneid-Klemm-Anschlußkontaktes,
- Fig.15: die Seitenansicht des Schneid-Klemm-Anschlußkontaktes
- Fig.16: die Draufsicht auf den Schneid-Klemm-Anschlußkontakt,
- Fig.17: die Abwicklung des Schneid-Klemm-Anschlußkontaktes,
- Fig.18: die Reihenklemme mit gestecktem Sicherungsmagazin,
- Fig.19: die Ansicht des Sicherungsmagazins,
- Fig.20: die Seitenansicht des Sicherungsmagazins,
- Fig.21: die Reihenklemme mit gestecktem Teststecker,
- Fig.22: die Ansicht des Teststeckers,
- Fig.23: die Seitenansicht des Teststeckers,
- Fig.24: die Ansicht des Mittelstücks des Teststeckers
- Fig.25: die Seitenansicht des Mittelstücks,
- Fig.26: das Mittelstück mit eingesetzen Kontaktmessern in Seitenansicht,
- Fig.27: das Mittelstück mit eingesetzen Kontaktmessern,
- Fig.28: die Reihenklemme mit Anschlußwerkzeug,
- Fig.29: das Anschlußwerkzeug in Ansicht,
- Fig.30: dis Seitenansicht des Anschlußwerkzeuges und
- Fig.31: die Untersicht des Anschlußwerkzeuges.

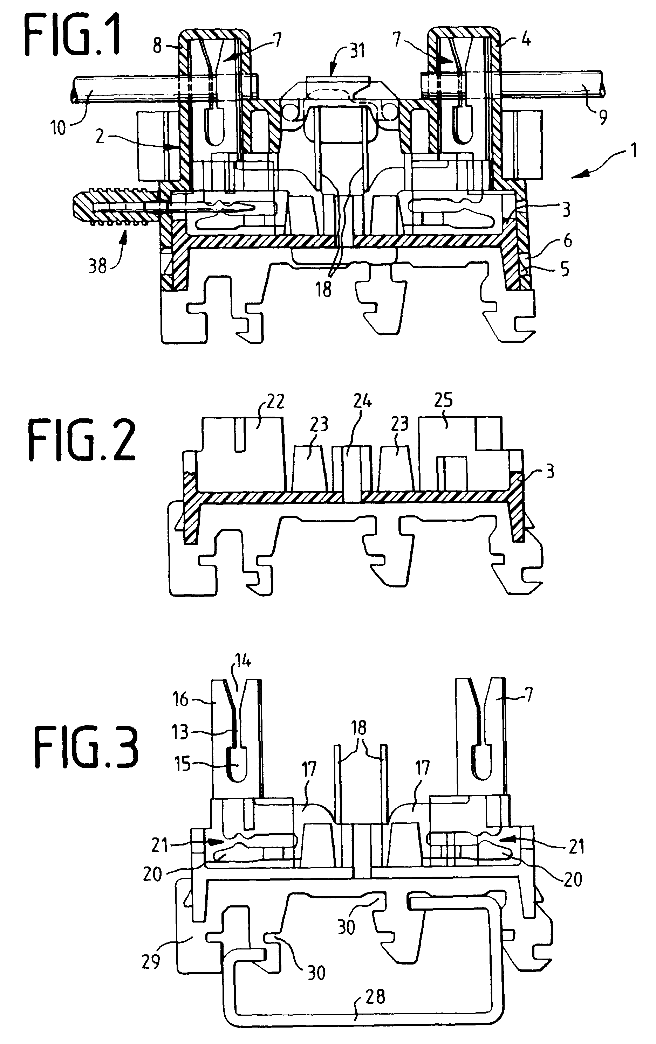

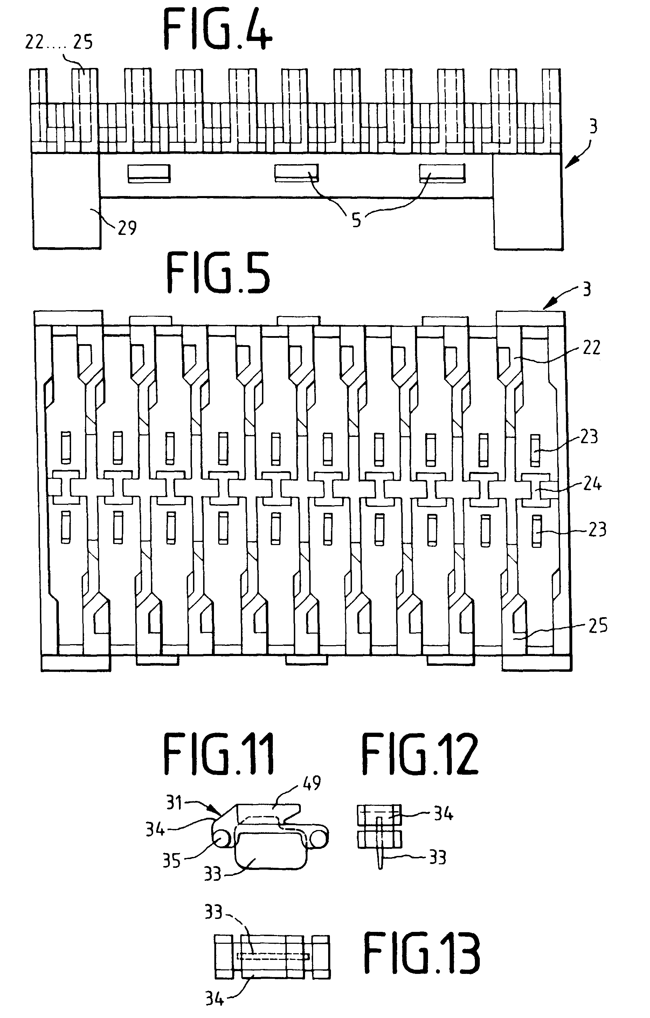

Die Reihenklemme 1 besteht gemäß Fig. 1 bis 6 aus einem Isolierstoffgehäuse 2 aus Unterteil 3 und Oberteil 4, die an ihren Längsseitenrändern mit Rastnasen 5 bzw. Rastnuten 6 versehen sind, die zum Verschließen des Isolierstoffgehäuses 2 ineinander rasten. Auf das Unterteil 3 sind Schneid-Klemm-Kontaktelemente 7 isoliert voneinander aufgesteckt, die in Erhebungen 8 des Oberteils 4 hineinragen und dort mit ankommenden und abgehenden Leitern 9 bzw. 10 kontaktiert sind. Die Erhebungen 8 weisen zwischen sich Klemmschlitze 11 mit Klemmstegen 12 auf, welche die Isolierung der Leiter 9,10 einklemmen. Im Ausführungsbeispiel weist die Reihenklemme 1 auf beiden Längsseiten je zehn Klemmschlitze 11 auf.

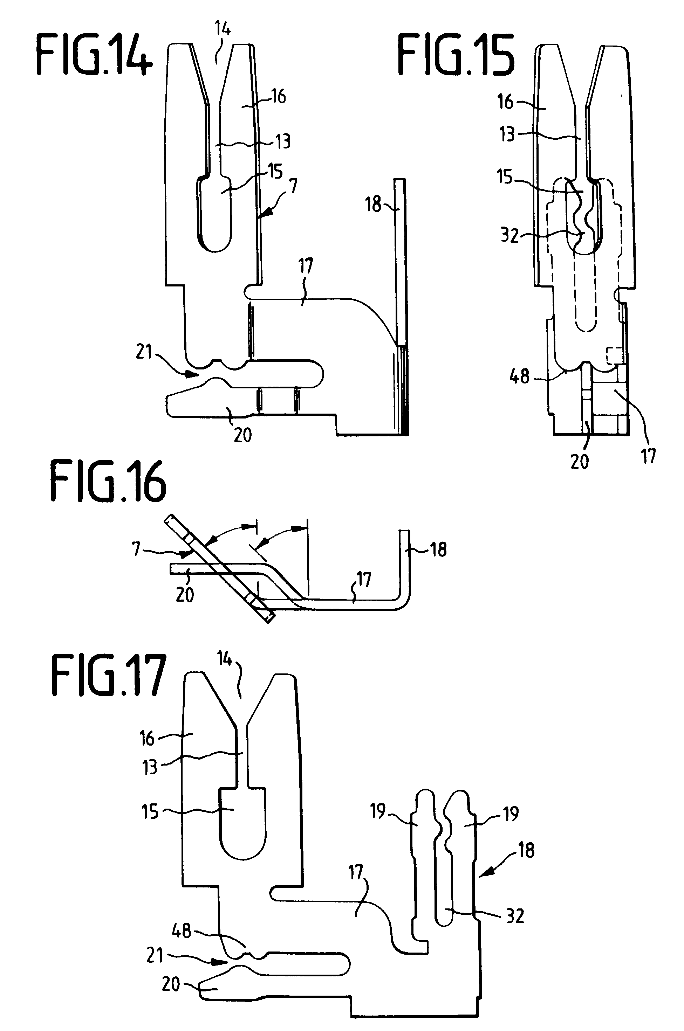

Wie es die Figuren 14 bis 17 zeigen, ist jedes Schneid-Klemm-Kontaktelement 7 mit einem Kontaktschlitz 13 versehen, der wiederum eine V-förmige Einführungsöffnung 14 aufweist und am unteren Ende in eine erweiterte Öffnung 15 übergeht, die zur Bewirkung einer gewissen Federbeweglichkeit der seitlichen Kontaktschenkel 16 dient, die aus metallisch leitendem, federnden Blattfedermaterial, insbesondere eine Kupferlegierung, gebildet sind. Jedes Schneid-Klemm-Kontaktelement 7 ist über einen Basissteg 17 mit einem zugeordneten Mittelabgriff 18 versehen, wobei das Schneid-Klemm-Kontaktelement 7 unter etwa 45° zum Basissteg 17 und der Mittelabgriff 18 unter etwa 90° zum Basissteg 17 U-förmig angeordnet sind, wie es die Draufsicht gemäß Fig. 16 zeigt. Der Mittelabgriff 18 ist aus zwei gegenüberliegenden Kontaktschenkeln 19 gebildet, die im Steckschlitz 32 profiliert ausgebildet sind, wie es insbesondere die Abwicklung in Fig. 17 zeigt. Der Basissteg 17 weist unterhalb des Schneid-Klemm-Kontaktelementes 7 eine L-förmig abgesetzte, parallel zum Basissteg 17 und unter 45° zum Schneid-Klemm-Kontaktelement 7 verlaufende Kontaktzunge 20 auf, die zusammen mit der Unterkante 48 des Basissteges 17 einen Brückenabgriff 21 bildet.

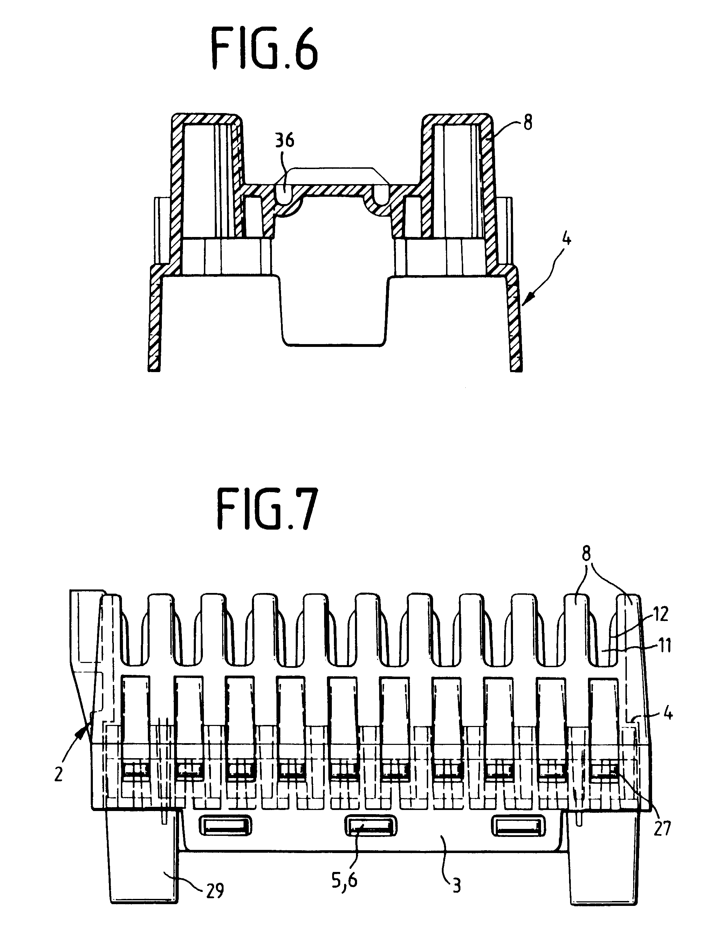

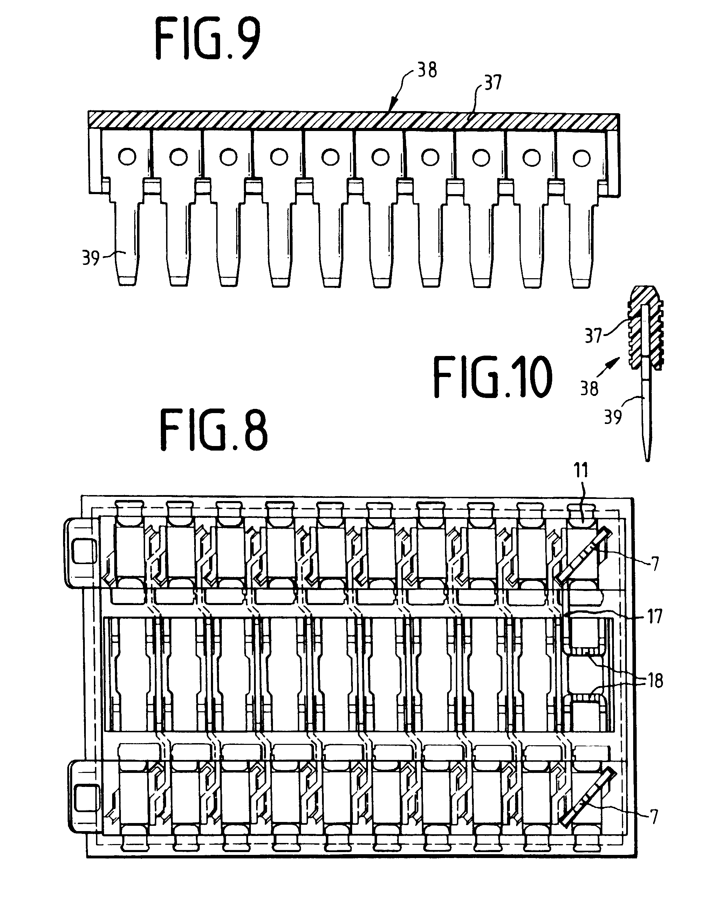

Wie es die Fig. 3 zeigt, sind zwei Schneid-Klemm-Kontaktelemente 7 mit den diesen jeweils zugeordneten Mittelabgriffen 18 und Brückenabgriffen 21 gegenüberliegend und isoliert voneinander auf das Unterteil 3 aufgesteckt, wozu dieses unterschiedlich ausgebildete Erhebungen 22 bis 25 aufweist, die insbesondere in Fig. 2 einzeln dargestellt sind und zwischen denen die einzelnen gemäß Fig. 16 abgewinkelten Schneid-Klemm-Kontaktelemente 7 mit ihren Basisstegen 17, Mittelabgriffen 18 und Kontaktzungen 20 angeordnet sind. Das in Fig. 6 einzeln dargestellte Oberteil 4 umschließt anschließend sowohl die einzelnen Schneid-Klemm-Kontaktelemente 7 als auch die Mittelabgriffe 18 und Brückenabgriffe 21, wobei die Schneid-Klemm-Kontaktelemente 7 über die Klemmschlitze 11, die Mittelabgriffe 18 über Stecköffnungen 26 und die Brückenabgriffe 21 über Stecköffnungen 27 (Fig. 7,8) zugänglich sind.

Zum Aufrasten der für zehn ankommende Leiter 9 und zehn abgehende Leiter 10 vorgesehenen Reihenklemme 1 auf DIN-Schienen 28 (Fig.3) sind unterhalb des Unterteiles 3 Erhebungen 29 mit Rastschlitzen 30 unterschiedlicher Anordnung ausgebildet, um so die Reihenklemme 1 auf DIN-Schienen 28 unterschiedlicher Bauarten aufrasten zu können.

Die auf Abstand im Isolierstoffgehäuse 2 gegenüberstehenden Mittelabgriffe 18 eines jeden Paares von Schneid-Klemm-Kontaktelementen 7 sind mit unterschiedlichen Funktionssteckern elektrisch miteinander verbindbar. Die Figuren 11 bis 13 zeigen einen gemäß Fig. 1 auf die Reihenklemme 1 aufgesteckten Verbindungsstecker 31, der aus einer in die Steckschlitze 32 der gegenüberliegenden Mittelabgriffe 18 einsteckbaren Kontaktzunge 33 und einem als Handgriff dienenden Kunststoffkörper 34 ausgebildet ist, der an den gegenüberliegenden Enden der Kontaktzunge 33 im Querschnitt kreisförmige Rastnasen 35 aufweist, die in im Mittelteil des Isolierstoffkörpers 2 angeordnete, im Querschnitt halbkreisförmige Rastnuten 36 einrastbar sind. Auf diese Weise können zwei gegenüberliegende Schneid-Klemm-Kontaktelemente 7 mittels eines Verbindungssteckers 31 elektrisch miteinander verbunden werden. Die kreisförmige Ausgestaltung der Rastnuten 36 und Rastnasen 35 ermöglicht, daß der Verbindungsstecker 31 schwenkbar im Mittelteil des Isolierstoffgehäuses 2 angeordnet ist und zum Auftrennen der Verbindung zwischen zwei Schneid-Klemm-Kontaktelementen 7 nur um 90° hochgeschwenkt werden muß, woraufhin die Kontaktzunge 33 außer Eingriff mit den Mittelabgriffen 18 kommt.

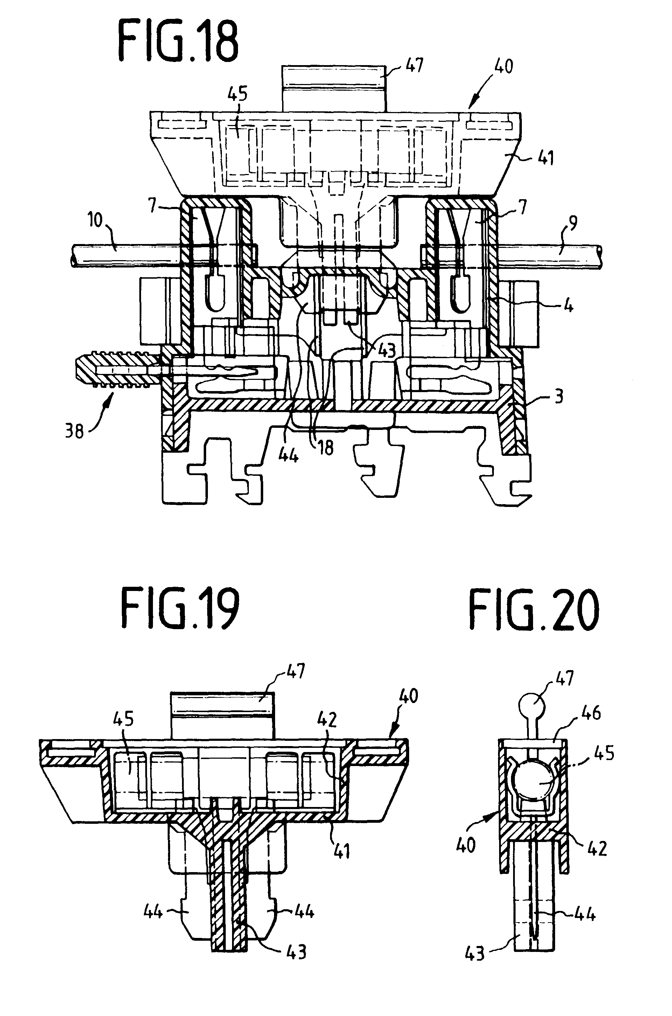

Die Fig. 9 zeigt zehn, in einem Kunststoffgehäuse 37 nebeneinander angeordnete Brückenstecker 38, deren Steckerzunge 39 durch die Stecköffnungen 27 (Fig.7) hindurch in die Brückenabgriffe 21 nebeneinanderliegender Schneid-Klemm-Kontaktelemente 7 auf einer Längsseite der Reihenklemme 1 einsteckbar sind. Die einzelnen Brückenstecker 38 sind im Kunststoffgehäuse 37 elektrisch leitend miteinander verbunden. Somit können alle zehn Schneid-Klemm-Kontaktelemente 7 einer Längsseite der Reihenklemme 1 gemeinsam elektrisch verbunden werden. Es kann auch eine geringere Anzahl von Brückensteckern 38 in einem Kunststoffgehäuse 37 nebeneinander angeordnet sein, um nur zwei oder mehrere Schneid-Klemm-Kontaktelemente 7 miteinander elektrisch zu verbinden. Auf diese Weise kann ein auf einer Längsseite der Reihenklemme 1 angeschlossener ankommender elektrischer Leiter 9 mit zwei oder mehreren auf der anderen Seite der Reihenklemme 1 angeschlossenen abgehenden elektrischen Leitern 10 gleichzeitig elektrisch leitend verbunden werden. Die Steckerzungen 39 durchdringen dabei die Stecköffnung 27 und greifen in den Brückenabgriff 21 (Fig.14 bis 17) ein, wobei die Steckerzunge 39 auf der Unterseite von der Kontaktzunge 20 und auf der Oberseite von der Unterseite des unter 45° angeordneten Teil des Basissteges 17 kontaktiert werden, wie es Fig.16 zeigt. Die Fig.18 bis 20 zeigen einen weiteren Funktionsstecker als Sicherungsmagazin 40. Dieses umfaßt einen sich quer über die Reihenklemme 1 erstreckenden Kunststoffkörper 41 mit einer Aufnahmekammer 42 und einer nach unten abstehenden Steckerführung 43 für beidseits derselben angebrachte metallische Kontaktzungen 44, die in die Steckschlitze 32 zweier gegenüberliegender Mittelabgriffe 18 eingreifen, wie es in Fig. 18 dargestellt ist. Die beiden Kontaktzungen 44 ragen in die Aufnahmekammer 42 des Sicherungsmagazines 40 hinein und stehen hier in nicht näher dargestellter Weise mit elektrischen Sicherungen 45 in Wirkverbindung, die in der Aufnahmekammer 42 angeordnet sind. Diese wird nach oben durch einen Klemmdeckel 46 mit Handgriff 47 abgeschlossen. Mittels des Sicherungsmagazines 40 werden die Mittelabgriffe 18 eines gegenüberliegenden Paares von Schneid-Klemm-Kontaktelementen 7 elektrisch verbunden und mittels der Sicherungen 45 gegen Überspannungen und /oder Überströme geschützt.

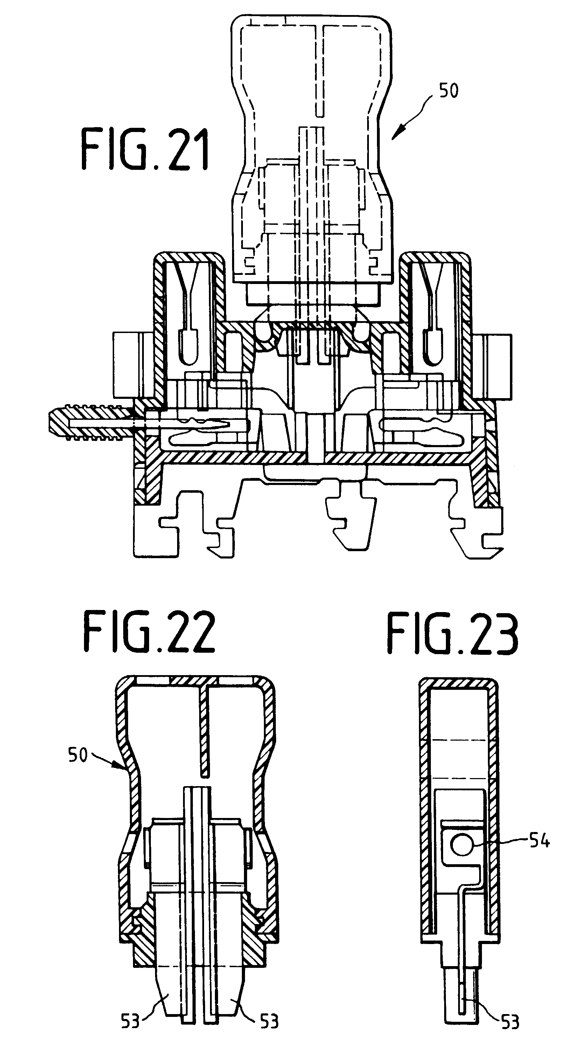

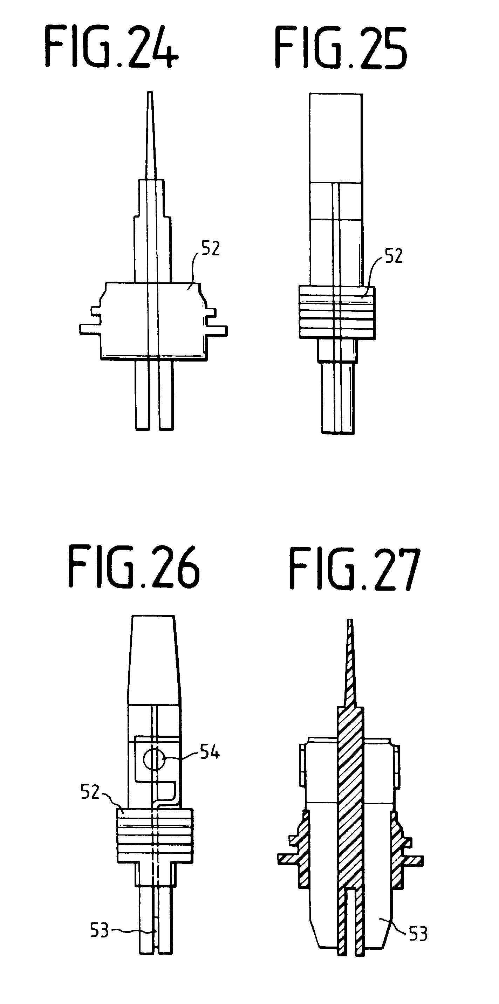

Die Figuren 21 bis 27 zeigen einen weiteren Funktionsstecker in Form eines Teststeckers 50. Dieser besteht aus einem zweiteiligen Kunststoffgehäuse 51, in das ein Mittelstück 52 aus Kunststoff eingesetzt ist, das metallische Kontaktzunge 53 getrennt voneinander aufnimmt, an deren Anschlußenden 54 zu Testzwecken dienende Kabel angeschlossen sind. Die Kontaktzungen 53 greifen in die Steckschlitze 32 der gegenüberliegenden Mittelabgriffe 18 zweier Schneid-Klemm-Kontaktelemente 7 ein, wie es in Fig. 21 dargestellt ist.

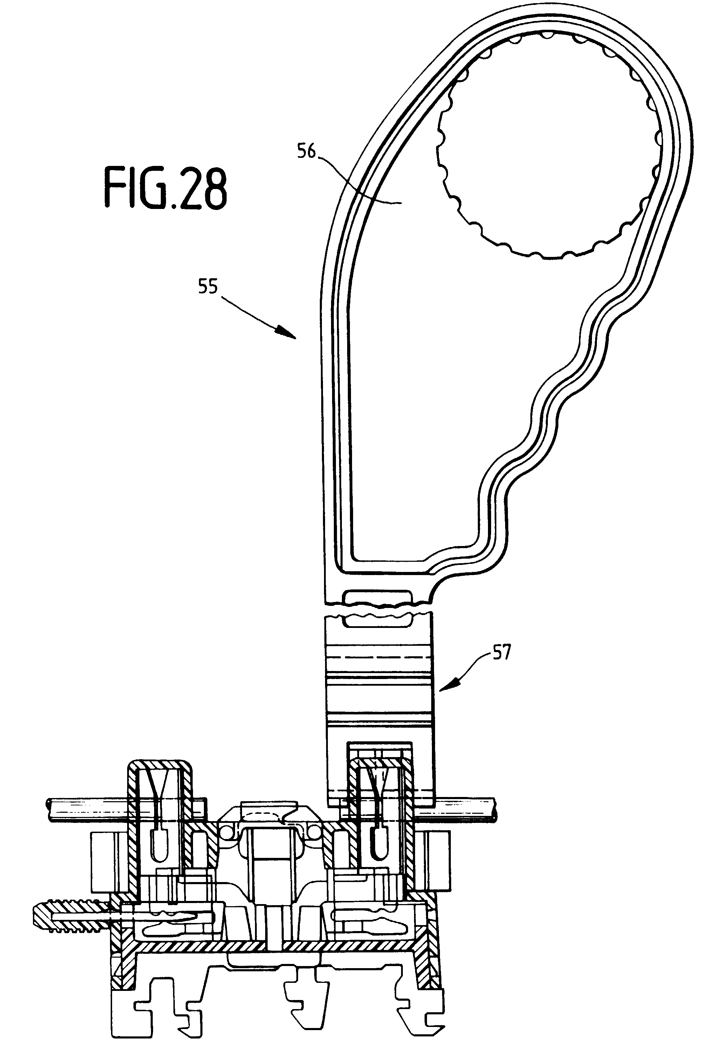

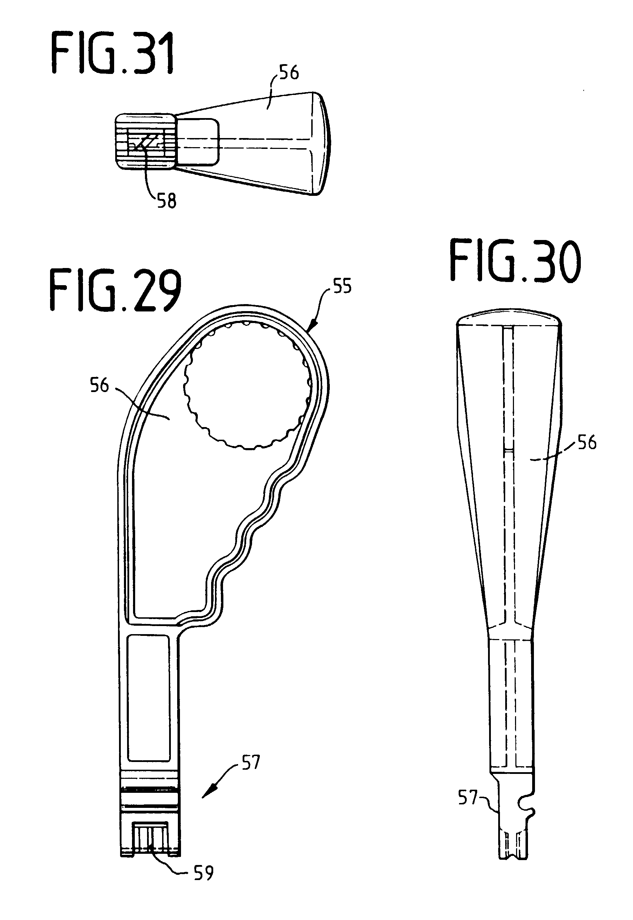

Schließlich zeigen die Figuren 28 bis 31 ein Anschlußwerkzeug 55 zum Anschließen der ankommenden und abgehenden Leiter 9,10 an die Schneid-Klemm-Kontaktelemente 7. Das Anschlußwerkzeug 55 umfaßt einen ergonomisch geformten Handgriff 56 mit einem Kopf 57, der einen in der Untersicht gemäß Fig. 31 doppel-T-förmigen Werkzeugkopf 58 mit einem Schlitz 59 im Mittelsteg aufweist. Mittels des Werkzeugkopfes 58 wird ein Leiter 9,10 in den Kontaktschlitz 13 eines Schneid-Klemm-Kontaktelementes 7 eingedrückt, wobei das Schneid-Klemm-Kontaktelement 7 in den Schlitz 59 eingreift, so daß der Werkzeugkopf 58 den Leiter 9,10 beidseits des blattförmigen Schneid-Klemm-Kontaktelementes 7 angreifen und in den Kontaktschlitz 13 eindrücken kann. Dabei wird mittels der scharfkantigen Schneiden der Kontaktschenkel 16 die Isolierung des Leiters 9,10 eingeschnitten und die Leiterseele mit dem Schneid-Klemm-Kontaktelement 7 elektrisch kontaktiert.

## Patentansprüche

1. Reihenklemme, bestehend aus einem Isolierstoffgehäuse (2) mit darin getrennt angeordneten Schneid-Klemm-Kontaktelementen (7) für ankommende und abgehende Leiter, wobei mindestens zwei Paare nebeneinander im Isoliergehäuse angeordnet sind,
dadurch gekennzeichnet,
daß die Schneid-Klemm-Kontaktelemente (7) mit Kontaktabgriffen (21) versehen und die nebeneinander angeordneten Schneid-Klemm-Kontaktelemente (7) auf einer Seite des Isoliestoffgehäuse (2) mittels in die Kontaktabgriffe (21) einsteckbarer Brückenstecker (38) elektrisch verbindbar sind und daß jedes Schneid-Klemm-Kontaktelement (7) über einen Basissteg (17) mit einem Mittelabgriff (18) verbunden und die einander im Isolierstoffgehäuse (2) gegenüberstehenden Mittelabgriffe (18) mit Funktionssteckern (31, 40, 50) elektrisch miteinander verbindbar sind, das Schneid-Klemm-Kontaktelement (7) unter etwa 45° zum Basissteg (17) und der Mittelabgriff (18) unter etwa 90° zum Basissteg (17) U-förmig angeordnet sind und darüber hinaus der Basissteg (17) unterhalb des Schneid-Klemm-Kontaktelements (7) eine parallel zum Basissteg (17) und unter 45° zum Schneid-Klemm-Kontaktelement (7) verlaufende Kontaktzunge (20) aufweist, die zusammen mit der Unterkante (48) des Basissteges (17) den Kontaktabgriff (21) bildet.

2. Reihenklemme nach Anspruch 1, dadurch gekennzeichnet, daß zehn Paare gegenüberliegender Schneid-Klemm-Kontaktelemente (7) im Isolierstoffgehäuse (2) nebeneinander angeordnet sind.

3. Reihenklemme nach Anspruch 2, dadurch gekennzeichnet, daß das Isolierstoffgehäuse (2) aus miteinander verrastbaren, die Schneid-Klemm-Kontaktelemente (7) aufnehmenden Ober- und Unterteilen (3,4) gebildet ist.

4. Reihenklemme nach einem der Ansprüche 1 bis 3, dadurch gekennzeichnet, daß der Mittelabgriff (18) einen Steckschlitz (32) zum Einstecken von Kontaktzungen (33,44,53) der Funktionsstecker (31,40,50) aufweist.

5. Reihenklemme nach Anspruch 4, dadurch gekennzeichnet, daß ein Funktionsstecker als Verbindungsstecker (31) mit einer in die Steckschlitze (32) gegenüberliegender Mittelabgriffe (18) einsteckbaren Kontaktzunge (33) ausgebildet ist, die an einem als Handgriff (49) dienenden Kunststoffkörper (34) gehalten ist.

6. Reihenklemme nach Anspruch 5, dadurch gekennzeichnet, daß der Kunststoffkörper (34) des Verbindungssteckers (31) an den gegenüberliegen Enden der Kontaktzunge (33) Rastnasen (35) aufweist, die in im Mittelteil des Isolierstoffkörpers (2) angeordnete Rastnuten (36) einrastbar sind.

7. Reihenklemme nach Anspruch 6, dadurch gekennzeichnet, daß die Rastnasen (35) im Querschnitt kreisförmig und die Rastnuten (36) im Querschnitt halbkreisförmig ausgebildet sind.

8. Reihenklemme nach Anspruch 4, dadurch gekennzeichnet, daß ein Funktionsstecker als Sicherungsmagazin (40) ausgebildet ist, das einen Kunststoffkörper (41) mit einer Aufnahmekammer (42) für Sicherungen (45) und eine Steckerführung (43) mit zwei Kontaktzungen (44) umfaßt, die in die Steckschlitze (32) zweier Mittelabgriffe (18) eines Paares von Schneid-Klemm-Kontaktelementen (7) eingreifen.

9. Reihenklemme nach Anspruch 4, dadurch gekennzeichnet, daß ein Funktionsstecker als Teststecker (50) ausgebildet ist, der ein Kunststoffgehäuse (51) mit zwei an einem Mittelstück (52) angebrachten Kontaktzungen (52) umfaßt, die bei gestecktem Teststecker (50) in die Steckschlitze (32) der Mittelabgriffe (18) zweier Schneid-Klemm-Kontaktelemente (7) eingreifen.

## Claims

1. Terminal block comprising an insulating housing (2) in which there are separately arranged insulation piercing terminal contact elements (7) for incoming and outgoing conductors, at least two pairs being arranged next to one another in the insulating housing, characterized in that the insulation piercing terminal contact elements (7) are provided with contact taps (21) and the insulation piercing terminal contact elements (7) arranged next to one another can be electrically connected on one side of the insulating housing (2) by means of jumper plugs (38) which can be inserted into the contact taps (21), and in that each insulation piercing terminal contact element (7) is connected via a base web (17) to a centre tap (18), and the centre taps (18), situated opposite one another in the insulating housing (2), can be electrically connected to one another by means of function plugs (31, 40, 50), the insulation piercing terminal contact element (7) is arranged in the shape of a U at about 45° to the base web (17) and the centre tap (18) is arranged in the shape of a U at about 90° to the base web (17) and, moreover, the base web (17) has below the insulation piercing terminal contact element (7) a contact tongue (20) which extends parallel to the base web (17) and at 45° to the insulation piercing terminal contact element (7) and forms the contact tap (21) together with the lower edge (48) of the base web (17).

2. Terminal block according to Claim 1, characterized in that ten pairs of insulation piercing terminal contact elements (7) situated opposite one another are arranged next to one another in the insulating housing (2) .

3. Terminal block according to Claim 2, characterized in that the insulating housing (2) is formed from upper and lower parts (3, 4) which can be latched to one another and which hold the insulation piercing terminal contact elements (7).

4. Terminal block according to one of Claims 1 to 3, characterized in that the centre tap (18) has an insertion slot (32) for inserting contact tongues (33, 44, 53) of the function plugs (31, 40 50).

5. Terminal block according to Claim 4, characterized in that a function plug is constructed as a connecting plug (31) with a contact tongue (33) which can be inserted into the insertion slots (32) of opposite centre taps (18) and is held at a plastic body (34) serving as a handle (49).

6. Terminal block according to Claim 5, characterized in that the plastic body (34) of the link connector (31) has at the opposite ends of the contact tongue (33) latching lugs (35) which can latch in latching grooves (36) arranged in the centre portion of the insulating body (2).

7. Terminal block according to Claim 6, characterized in that the latching lugs (35) are constructed with a circular cross-section, and the latching grooves (36) are constructed with a semicircular cross-section.

8. Terminal block according to Claim 4, characterized in that a function plug is constructed as a fuse magazine (40) which comprises a plastic body (41) with a holding chamber (42) for fuses (45) and a connector guide (43) with two contact tongues (44) which engage in the insertion slot (32) of two centre taps (18) of a pair of insulation piercing terminal contact elements (7).

9. Terminal block according to Claim 4, characterized in that a function plug is constructed as a test plug (50) which comprises a plastic housing (51) with two contact tongues (52), which are fitted on a centre piece (52) and, with the test plug (50) inserted, engage in the insertion slot (32) of the centre taps (18) of two insulation piercing terminal contact elements (7).

## Revendications

1. Borne pour montage en ligne constituée d'un boîtier isolant (2) dans lequel sont montés séparément des éléments de contact (7) autodénudants pour des fils conducteurs entrants et sortants, au moins deux paires d'entre eux étant agencées l'une à côté de l'autre dans le boîtier isolant,
caractérisée en ce que
les éléments de contact (7) autodénudants sont équipés de prises de contact (21) et les éléments de contact (7) autodénudants agencés l'un à côté de l'autre sur un côté du boîtier isolant (2) peuvent être connectés électriquement au moyen de fiches mâles à pont (38) qui peuvent être enfichées dans les prises de contact (21), et en ce que chaque élément de contact (7) autodénudant est connecté, via une barrette de base (17), à une prise médiane (18) et les prises médianes (18) situées l'une en regard de l'autre dans le boîtier isolant (2) peuvent être connectées électriquement l'une à l'autre par des fiches mâles de fonction (31, 40, 50), l'élément de contact (7) autodénudant et la prise médiane (18) sont agencés en U de manière que le premier fasse un angle d'environ 45° avec la barrette de base (17) et que la seconde fasse un angle d'environ 90° avec la barrette de base (17), et, en outre, la barrette de base (17) présente, en dessous de l'élément de contact (7) autodénudant, une languette de contact (20) qui s'étend parallèlement à la barrette de base (17) et forme un angle de 45° avec l'élément de contact (7) autodénudant, ladite languette formant avec le bord inférieur (48) de la barrette de base (17) la prise de contact (21).

2. Borne pour montage en ligne selon la revendication 1, caractérisée en ce que dix paires d'éléments de contact (7) autodénudants agencés l'un en regard de l'autre sont agencées l'une à côté de l'autre dans le boîtier isolant (2).

3. Borne pour montage en ligne selon la revendication 2, caractérisée en ce que le boîtier isolant (2) est formé de parties supérieure et inférieure (3, 4) qui peuvent être engagées l'une sur l'autre et reçoivent les éléments de contact (7) autodénudants.

4. Borne pour montage en ligne selon l'une quelconque des revendications 1 à 3, caractérisée en ce que la prise médiane (18) présente une fente d'enfichage (32) pour l'enfichage de languettes de contact (33, 44, 53) des fiches mâles de fonction (31, 40, 50).

5. Borne pour montage en ligne selon la revendication 4, caractérisée en ce qu'une fiche mâle de fonction se présente sous la forme d'une fiche mâle de connexion (31) avec une languette de contact (33) enfichable dans les fentes d'enfichage (32) de prises médianes (18) opposées, ladite languette étant supportée sur un corps (34) de matière plastique servant d'organe de manipulation (49).

6. Borne pour montage en ligne selon la revendication 5, caractérisée en ce que le corps (34) de matière plastique de la fiche mâle de connexion (31) présente, sur les extrémités opposées de la languette de contact (33), des saillies d'encliquetage (35) qui peuvent être engagées dans des rainures d'encliquetage (36) agencées dans la partie médiane du corps (2) de matériau isolant.

7. Borne pour montage en ligne selon la revendication 6, caractérisée en ce que les saillies d'encliquetage (35) sont circulaires en coupe transversale et les rainures d'encliquetage (36) sont semi-circulaires en coupe transversale.

8. Borne pour montage en ligne selon la revendication 4, caractérisée en ce qu'une fiche mâle de fonction se présente sous la forme d'un magasin de fusibles (40) qui contient un corps (41) de matière plastique avec une chambre réceptrice (42) pour des fusibles (45) et un guide-fiche mâle (43) avec deux languettes de contact (44), qui s'engagent dans les fentes d'enfichage (32) de deux prises médianes (18) d'une paire d'éléments de contact (7) autodénudants.

9. Borne pour montage en ligne selon la revendication 4, caractérisée en ce qu'une fiche mâle de fonction se présente sous la forme d'une fiche mâle d'essai (50) qui comprend un boîtier (51) de matière plastique avec deux languettes de contact (52) agencées sur une pièce médiane (52), lesdites languettes s'engageant, lorsque la fiche mâle d'essai (50) est enfichée, dans les fentes d'enfichage (32) des prises médianes (18) de deux éléments de contact (7) autodénudants.
